# EUROPEAN PATENT SPECIFICATION

(11) **EP 4 398 751 B1**
(45) Date of publication and mention of the grant of the patent: **29.10.2025**
(21) Application number: 22773312.8
(22) Date of filing: 02.09.2022
(51) Int. Cl.: A24F 40/42, A24F 40/46, A24F 40/51, A24F 40/57, A24F 40/10

(54) **AEROSOL GENERATING CONSUMABLE WITH FUSE ELEMENT**
AEROSOLERZEUGENDER VERBRAUCHSARTIKEL MIT SICHERUNGSELEMENT
CONSOMMABLE DE GÉNÉRATION D'AÉROSOL AVEC ÉLÉMENT DE FUSIBLE

(30) Priority: 08.09.2021 EP 21195470
(43) Date of publication of application: 17.07.2024
(73) Proprietor: Philip Morris Products S.A., 2000 Neuchâtel (CH)
(72) Inventor: BATISTA, Rui Nuno, 2000 Neuchâtel (CH); LOPEZ, Serge, 2000 Neuchâtel (CH)
(74) Representative: Reddie & Grose LLP
(86) International application number: PCT/IB2022/058274
(87) International publication number: WO 2023/037217

(56) References cited:
- EP-A1- 3 838 014
- CN-U- 204 317 506
- KR-A- 20200 123 691
- US-A1- 2014 305 454

## Description

The present disclosure relates to an aerosol generating consumable with a fuse element providing overheating protection when used in an aerosol generating system.

Sensorial media of commercial electronic cigarettes are generally liquid (so called "e-liquids"). These e-liquids are typically contained in aerosol generating consumables or "pods" that are replaceable into the electronic cigarette. These pods include a heater in contact with a porous material or wick. This porous or wick transports e-liquid by capillarity action to the heater for vaporization into inhalation airflow of the electronic cigarettes. The heater of current commercial electronic cigarette systems is typically integrated in the replaceable cartridge or "pod" containing the e-liquid.

When the used pod is consumed or depleted, the user inserts a new pod or refills the pod with aerosol generating e-liquid. However, the user may misuse the aerosol generating system with an empty pod. Such action may cause a "dry hit" and may generate a burning smell or unpleasant flavours. The user may also refill an unknown or counterfeit e-liquid into the empty pod and contaminate the pod with a non-compliant e-liquid vaporizing at a greater temperature than compliant e-liquid.

Current overheating protection requires a complex configuration, which increases the overall cost of the aerosol generating consumable or pod, which makes the aerosol generating consumable expensive to produce.

There is a need for an aerosol generating consumable that provides reliable overheating protection with a simple heating element design.

It would be desirable to provide an aerosol generating consumable that provides reliable overheating protection with a simple heating element design. It would be desirable to provide an aerosol generating consumable that provides improved heating efficiency. It would be desirable to provide an aerosol generating consumable that has an irreversible breaking of the heating element in response to the depletion of the aerosol generating liquid.

EP 3838014 A1 relates to a vaporizing part of a microparticle generator. The vaporizing part of the microparticle generator comprises: a porous carrier for absorbing and storing liquid; a conductive heating pattern coupled to the porous carrier and supplied with power to generate heat; and a sensor pattern coupled to the porous carrier to measure a heating temperature of the conductive heating pattern, wherein the liquid carried by the porous carrier is vaporized as the heating pattern generates heat. A heating pattern and a sensor pattern are disposed inside a porous carrier in a three-dimensional shape. Power lines of the heating pattern and the sensor pattern are drawn to the outside of the porous carrier to transfer signals and power. The heating pattern is provided as a zigzag structure with several bends while the sensor pattern is provided as a straight structure.

This disclosure is directed to an aerosol generating consumable with a fuse element providing overheating protection when used in an aerosol generating system. The aerosol generating consumable includes a heating element having an electrically resistive heating element and a thermo-conductive polymeric element. The electrically resistive heating element and a thermo-conductive polymeric element cooperate to form an overheating protection circuit that breaks the fuse element once the heating element reaches a pre-determined high temperature limit.

According to an aspect of the present invention, there is provided an aerosol generating consumable which includes a liquid reservoir configured to hold an aerosol generating liquid and defining a liquid outlet aperture and a heating assembly fixed to the liquid outlet aperture. The heating assembly includes a capillary body defining a porous outer surface. The capillary body is configured to flow aerosol generating liquid from the liquid outlet aperture to the porous outer surface. An electrically resistive heating element is fixed to the porous outer surface and a thermo-conductive polymeric element is fixed to the porous outer surface. The electrically resistive heating element includes an electrical fuse portion configured to stop current flow through the resistive heating element.

According to another aspect of the present invention, an aerosol generating system includes an aerosol generating device having a consumable receiving surface with device electrical contacts, a power supply, and control electronics electrically connected to the power supply and the device electrical contacts. An aerosol generating consumable described herein is configured to mate with the consumable receiving surface and electrically connect the device electrical contacts with the electrically resistive heating element and the thermo-conductive polymeric element.

A method of disabling an aerosol generating consumable heating element includes providing the aerosol generating system described herein, heating the aerosol generating liquid to form an aerosol with the heating element, sensing an electrical current across the thermo-conductive polymeric element on the heating element with the control electronics, and delivering a fusing current to the electrically resistive heating element electrical fuse portion in response to a sensed a low threshold current value across the thermo-conductive polymeric element.

It is advantageous to disable an aerosol generating consumable with a simple and reliable overheating protection circuit described herein for several reasons. The temperature sensing element is a simple and reliable thermo-conductive polymeric element coupled to the element it is sensing. The fuse element is a simple and reliable circuit breaking element that disables the aerosol generating consumable from further use. The over-heating protection circuit irreversibly fuses the heating element to prevent operation of the aerosol generating consumable once the aerosol generating liquid is depleted. Once disabled, a user cannot refill the aerosol generating liquid, preventing counterfeit aerosol generating liquid use. Placing the heating element and thermo-conductive polymeric element on more than one surface of the capillary body improves heating uniformity and efficiency of the capillary body.

All scientific and technical terms used herein have meanings commonly used in the art unless otherwise specified. The definitions provided herein are to facilitate understanding of certain terms used frequently herein.

As used herein, the singular forms "a", "an", and "the" encompass embodiments having plural referents, unless the content clearly dictates otherwise.

As used herein, "or" is generally employed in its sense including "and/or" unless the content clearly dictates otherwise. The term "and/or" means one or all of the listed elements or a combination of any two or more of the listed elements.

As used herein, "have", "having", "include", "including", "comprise", "comprising" or the like are used in their open-ended sense, and generally mean "including, but not limited to". It will be understood that "consisting essentially of", "consisting of", and the like are subsumed in "comprising," and the like.

The words "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the disclosure, including the claims.

The term "substantially" as used here has the same meaning as "significantly," and can be understood to modify the relevant term by at least about 90 %, at least about 95 %, or at least about 98 %. The term "not substantially" as used here has the same meaning as "not significantly," and can be understood to have the inverse meaning of "substantially," i.e., modifying the relevant term by not more than 10%, not more than 5%, or not more than 2%.

The term "electrically conductive material" denotes a material having a resistivity of 1×10⁻² Ωm, or less.

The term "capillary body" refers to a component of the heating assembly that is able to convey the aerosol generating liquid to the heating element by capillary action.

The term "porous" means formed from a material that is permeable to the aerosol generating liquid and allows the aerosol generating liquid to migrate through it.

The term "nicotine" refers to nicotine and nicotine derivatives such as free-base nicotine, nicotine salts and the like.

As used herein, the terms "control electronics", "controller" and "processor" refer to any device or apparatus capable of providing computing capabilities and control capabilities suitable, or configurable to perform the methods, process, and techniques described herein such as, for example, microprocessors, digital signal processors (DSP), application specific integrated circuits (ASIC), field-programmable gate arrays (FPGA), equivalent discrete or integrated logic circuitry, or any combination thereof and of providing suitable data storage capabilities that includes any medium (for example, volatile or non-volatile memory, or magnetic recordable medium such as a disk or tape) containing digital bits (for example, encoded in binary or trinary) that may be readable and writeable.

The term "aerosol" is used here to refer to a suspension of solid particles or liquid droplets, or a combination of solid particles and liquid droplets in a gas. The gas may be air. The solid particles or liquid droplets may comprise one or more volatile flavor compounds. Aerosol may be visible or invisible. Aerosol may include vapors of substances that are ordinarily liquid or solid at room temperature. Aerosol may include vapors of substances that are ordinarily liquid or solid at room temperature, in combination with solid particles or in combination with liquid droplets or in combination with both solid particles and liquid droplets. The aerosol preferably comprises nicotine.

The term "aerosol generating liquid" is used here to refer to a liquid capable of releasing one or more volatile compounds that can form an aerosol. In some embodiments, an aerosol generating liquid may be heated to volatilize one or more components of the aerosol generating liquid to form an aerosol. Aerosol generating liquid may be referred to as "e-liquid". The aerosol generating liquid may be provided as part of an aerosol generating consumable. The aerosol generating liquid may be provided in an aerosol generating consumable.

The aerosol generating liquid preferably comprises nicotine. Aerosol generating liquid may comprise at least one aerosol-former. An aerosol-former is any suitable known compound or mixture of compounds that, in use, facilitates formation of a dense and stable aerosol and that is substantially resistant to thermal degradation at the operating temperature of operation of the system. Suitable aerosol-formers are well known in the art and include, but are not limited to polyhydric alcohols, such as triethylene glycol, 1,3-butanediol and glycerine; esters of polyhydric alcohols, such as glycerol mono-, di- or triacetate; and aliphatic esters of mono-, di- or polycarboxylic acids, such as dimethyl dodecanedioate and dimethyl tetradecanedioate. Preferred aerosol formers are polyhydric alcohols or mixtures thereof, such as triethylene glycol, 1,3-butanediol and, most preferred, glycerine. Aerosol generating liquid may comprise other additives and ingredients, such as flavorants.

The term "aerosol generating consumable" is used herein to refer to a disposable product capable of including (for example, holding, containing, having, or storing) aerosol generating liquid. An aerosol generating consumable may be capable of removably interfacing, or docking, with an aerosol generating device. This allows the aerosol generating device to generate aerosol from the aerosol generating liquid of the aerosol generating consumable. A "pod" is an example of an "aerosol generating consumable".

The term "aerosol generating device" is used here to refer to any device configured to be used or utilized with an aerosol generating consumable that releases volatile compounds to form an aerosol that may be inhaled by a user. The aerosol generating device may be interfaced with the aerosol generating consumable comprising the aerosol generating liquid.

The term "heating element" is used here to refer to any device, apparatus, or portion thereof configured to provide heat, or heat energy, to an aerosol generating consumable to release volatile compounds from the aerosol generating consumable to form an aerosol.

The term "thermo-conductive polymeric element" refers to a thermally sensitive resistor or thermistor, such as a positive temperature coefficient thermistor for which the resistance increases significantly with increasing temperature. The "thermo-conductive polymeric element" may be formed of a polymer and optionally conductive fillers.

An aerosol generating consumable with a fuse element provides overheating protection when used in an aerosol generating system. The aerosol generating consumable includes a heating element having an electrically resistive heating element and a thermo-conductive polymeric element. The electrically resistive heating element and a thermo-conductive polymeric element cooperate with the control electronics and power supply to form an overheating protection circuit that delivers a current surge and breaks the fuse element when the heating element reaches a pre-determined high temperature limit. This pre-determined high temperature limit is a temperature greater than a volatilization temperature of the standard aerosol generating liquid provided in the aerosol generating consumable.

This high temperature limit may be reached due to depletion of the aerosol generating liquid in the aerosol generating consumable. Thus, once the aerosol generating liquid in the aerosol generating consumable is consumed, the temperature of the heating assembly and particularly the capillary body increases since the heat of vaporization energy is no longer entering into aerosol generating liquid.

This high temperature limit may be reached due to a non-standard aerosol generating liquid disposed into the aerosol generating consumable. This non-standard or counterfeit aerosol generating liquid may have a greater volatilization temperature than the standard or manufacture filled aerosol generating liquid in the aerosol generating consumable. Thus, the temperature of the heating assembly and particularly the capillary body increases since the volatilization temperature of the non-standard or counterfeit aerosol generating liquid is greater than the standard or manufacture filled aerosol generating liquid in the aerosol generating consumable.

The thermo-conductive polymeric element and the resistive heating element are preferably electrically parallel with each other. Alternatively, the thermo-conductive polymeric element and the resistive heating element are electrically in series with each other. The thermo-conductive polymeric element and the resistive heating element may be electrically isolated from each other but configured to be independently electrically connected to the control electronics.

The electrical fuse portion of the electrically resistive heating element is preferably a portion or region of the resistive wire or trace forming the electrically resistive heating element. This portion or region of the resistive wire or trace has a reduced width, or a reduced cross-sectional area that is configured to preferentially melt or break the resistive wire or trace when a fusing current is passed through the fuse portion, thereby irreversibly interrupting, and stopping the current through the electrically resistive heating element. Once the electrical fuse portion is broken, the aerosol generating consumable is permanently disabled.

The electrically resistive heating element and the electrical fuse portion may be formed of the same material. The electrically resistive heating element and the electrical fuse portion may be formed of any suitable electrically conductive material. The electrically conductive material comprises one or more of a metal, an electrically conductive polymer, or an electrically conductive ceramic.

Suitable electrically conductive metals include aluminium, silver, nickel, gold, platinum, copper, tungsten, and alloys thereof. The electrically conductive metal may preferably be a nickel alloy. The electrically conductive metal may preferably be a nickel-iron alloy. The electrically conductive metal may preferably be a nickel-chromium-iron alloy. The electrically conductive material may include a metal powder suspended in a glue, such as an epoxy resin. The electrically conductive material may include silver-loaded epoxy.

Suitable electrically conductive polymers include PEDOT (poly(3,4-ethylenedioxythiophene)), PSS (poly(p-phenylene sulfide)), PEDOT:PSS (mixture of both PEDOT and PSS), PANI (polyanilines), PPY (poly(pyrrole)s), PPV (Poly(p-phenylene vinylene)), or any combination thereof.

Suitable electrically conductive ceramics include ITO (Indium Tin Oxide), SLT (lanthanum-doped strontium titanate), SYT (yttrium-doped strontium titanate), or any combination thereof.

The thermo-conductive polymeric element is preferably a positive temperature coefficient (PTC) thermistor. In a positive temperature coefficient thermistor, resistance across the thermo-conductive polymeric element increases as temperature rises. In a positive temperature coefficient thermistor, current across the thermo-conductive polymeric element decreases as temperature rises.

The thermo-conductive polymeric element resistance preferably substantially increases at a temperature above the standard or manufacture filled aerosol generating liquid in the aerosol generating consumable. The thermo-conductive polymeric element conductivity or current preferably substantially decreases at a temperature above the standard or manufacture filled aerosol generating liquid in the aerosol generating consumable.

The thermo-conductive polymeric element resistance may substantially increase at a temperature above about 250 °C. The thermo-conductive polymeric element conductivity or current may substantially decrease at a temperature above about 250 °C.

The thermo-conductive polymeric element may have non-linear resistance-temperature curve or current-temperature curve. The thermo-conductive polymeric element may have a highly non-linear resistance-temperature curve or current-temperature curve. The thermo-conductive polymeric element may have an exponential resistance-temperature curve or current-temperature curve.

The thermo-conductive polymeric element may have a non-linear resistance-temperature curve or current-temperature curve at a temperature above the standard or manufacture filled aerosol generating liquid in the aerosol generating consumable. The thermo-conductive polymeric element may have a highly non-linear resistance-temperature curve or current-temperature curve at a temperature above the standard or manufacture filled aerosol generating liquid in the aerosol generating consumable. The thermo-conductive polymeric element may have an exponential resistance-temperature curve or current-temperature curve at a temperature above the standard or manufacture filled aerosol generating liquid in the aerosol generating consumable.

The thermo-conductive polymeric element may have a non-linear resistance-temperature curve or current-temperature curve over a temperature range of interest, such as a range from about 250 °C to about 275 °C. The thermo-conductive polymeric element may have a highly non-linear resistance-temperature curve or current-temperature curve over a temperature range of interest, such as a range from about 250 °C to about 275 °C. The thermo-conductive polymeric element may have an exponential resistance-temperature curve or current-temperature curve over a temperature range of interest, such as a range from about 250 °C to about 275 °C.

The thermo-conductive polymeric element may be formed of a suitable polymer. The thermo-conductive polymeric element may formed of a polymer selected from; polyethylene, polypropylene, polyvinyl acetate, polycaprolactone polyesters, syndiotactic polystyrene (sPS), polyamides, poly-tetra-fluorethylene, polybutylene-terephthalate, polyphenylene-sulfide, high-density polyethylene, linear low-density polyethylene, low-density polyethylene, mid-density polyethylene, polyisobutylene, poly(vinylidene chloride), poly(vinylidene fluoride), polyacrylonitrile, polybutadiene, polyethylene-terephthalate, poly(8-aminocaprylic acid), poly(vinyl alcohol), ethylene-based co- and terpolymers, maleic anhydride modified polyethylene, glycidyl methacrylate modified grafted polyethylene, maleic acid anhydride modified polypropylene, glycidyl methacrylate modified polypropylene, or blends, mixtures or combinations of one or more of these polymers.

The thermo-conductive polymeric element may be formed of a polymer and conductive filler. The conductive filler may be dispersed in the polymer matrix. Suitable polymers are listed above. Conductive fillers may include carbon particles. Conductive fillers may include metal particles. Conductive fillers may include metal oxide particles.

The electrically conductive material from which the heating element is formed may be deposited onto the porous outer surface of the capillary body in any suitable manner. For example, the electrically conductive material from which the heating element is formed may be deposited onto the porous outer surface of the capillary body as a liquid using a dispensing pipette or syringe, or using a fine-tipped transferring device such as a needle.

The electrically conductive material from which the heating element is formed may be formed of a printable electrically conductive material that may be printed on the porous outer surface of the capillary body. Any suitable known printing technique may be used. For example, one or more of screen-printing, gravure printing, flex-printing, inkjet printing. Such printing processes may be particularly applicable for high-speed production processes.

The electrically conductive material from which the heating element is formed may be deposited onto the porous outer surface of the capillary body by one or more vacuum deposition processes, such as evaporation deposition and sputtering.

The electrically conductive material of the thermo-conductive polymeric element may be deposited onto the porous outer surface of the capillary body in any suitable manner. For example, the electrically conductive material of the thermo-conductive polymeric element may be deposited onto the porous outer surface of the capillary body as a liquid using a dispensing pipette or syringe, or using a fine-tipped transferring device such as a needle.

The electrically conductive material of the thermo-conductive polymeric element may be formed of a printable electrically conductive material that may be printed on the porous outer surface of the capillary body. Any suitable known printing technique may be used. For example, one or more of screen-printing, gravure printing, flex-printing, inkjet printing. Such printing processes may be particularly applicable for high-speed production processes.

The electrically conductive material of the thermo-conductive polymeric element may be deposited onto the porous outer surface of the capillary body by one or more vacuum deposition processes, such as evaporation deposition and sputtering.

The capillary body may be a capillary wick or other type or shape of capillary body. The capillary body comprises a capillary material. The capillary material may include any suitable material or combinations of materials. The capillary body may be formed of a single capillary material.

The capillary material may have a fibrous or spongy structure. The capillary material preferably comprises a bundle of capillaries. For example, the capillary material may comprise a plurality of fibres or threads or other fine bore tubes. The fibres or threads may be generally aligned to convey liquid to the heating element. Alternatively, the capillary material may comprise sponge-like or foam-like material. The structure of the capillary material forms a plurality of small bores or tubes, through which the liquid can be transported by capillary action. The capillary material or materials may comprise any suitable material or combination of materials. Examples of suitable materials are a sponge or foam material, ceramic- or graphite-based materials in the form of fibres or sintered powders, foamed metal or plastics material, a fibrous material, for example made of spun or extruded fibres, such as cellulose acetate, polyester, or bonded polyolefin, polyethylene, terylene or polypropylene fibres, nylon fibres or ceramic. The capillary material may have any suitable capillarity and porosity so as to be used with different liquid physical properties. The liquid has physical properties, including but not limited to viscosity, surface tension, density, thermal conductivity, boiling point, and vapour pressure, which allow the liquid to be transported through the capillary device by capillary action. The capillary body may preferably be formed of a porous ceramic material and be referred to as a porous ceramic body.

The heating assembly may comprise first and second electrically conductive contact portions in electrical contact with the heating element. The thermo-conductive polymeric element may be electrically coupled to the first and second electrically conductive contact portions. The first and second electrically conductive contact portions may be formed from an electrically conductive material deposited directly onto the porous outer surface of the capillary body, as described above.

The heating assembly may comprise first and second electrically conductive contact portions in electrical contact with the heating element. The thermo-conductive polymeric element may be electrically coupled to the first and a third electrically conductive contact portions. The first, second and third electrically conductive contact portions may be formed from an electrically conductive material deposited directly onto the porous outer surface of the capillary body, as described above.

The heating assembly may comprise first and second electrically conductive contact portions in electrical contact with the heating element. The thermo-conductive polymeric element may be electrically coupled to third and fourth electrically conductive contact portions. The first, second, third, and fourth electrically conductive contact portions may be formed from an electrically conductive material deposited directly onto the porous outer surface of the capillary body, as described above.

The electrically resistive heating element may be fixed to two sides of the capillary body. The first electrically conductive contact portion is fixed to one of the two side and second electrically conductive contact portions is fixed to the remaining side of the two sides. The thermo-conductive polymeric element may also be fixed to the two sides of the capillary body. Placing both the electrically resistive heating element and the thermo-conductive polymeric element on two sides of the capillary body improves the heating uniformity of the capillary body and temperature sensing capabilities of the thermo-conductive polymeric element.

The electrically resistive heating element may be fixed to three sides of the capillary body. The first electrically conductive contact portion is fixed to one of the three side and second electrically conductive contact portions is fixed to one of the two remaining sides. The thermo-conductive polymeric element may also be fixed to the three sides of the capillary body. Placing both the electrically resistive heating element and the thermo-conductive polymeric element on three sides of the capillary body further improves the heating uniformity of the capillary body and temperature sensing capabilities of the thermo-conductive polymeric element.

The electrically resistive heating element preferably defines a curvilinear shape or serpentine shape on the capillary body and the thermo-conductive polymeric element defines a linear or straight-line shape on the capillary body.

The electrical resistance of the heating element may be between 0.3 and 4 Ohms. More preferably, the electrical resistance of the heating element is between 0.5 and 3 Ohms, and more preferably about 1 Ohm.

The electrically resistive heating element and the thermo-conductive polymeric element are electrically connected to control electronics in an aerosol generating device when the aerosol generating consumable is mated with the aerosol generating device. The control electronics controls the power supplied to the resistive heating element. The control electronics senses the resistance or current flow through the thermo-conductive polymeric element. The control electronics modulates the power supplied to the resistive heating element and senses the resistance or current flow through the thermo-conductive polymeric element simultaneously.

The aerosol generating consumable, described above, mates with an aerosol generating device to form an aerosol generating system. The aerosol generating consumable is a replaceable article in the aerosol generating system. Once the aerosol generating consumable is consumed by the consumer, the depleted aerosol generating consumable is replaced by the consumer with a new aerosol generating consumable with a full charge of aerosol generating liquid. Advantageously, the aerosol generating consumable, described above, once consumed is disabled causing the end-of-life for the depleted aerosol generating consumable.

The aerosol generating consumable is removably coupled to the aerosol generating device. As used herein, the aerosol generating consumable being "removably coupled" to the aerosol generating device means that the aerosol generating consumable and aerosol generating device can be coupled and uncoupled from one another without damaging either the aerosol generating device or the aerosol generating consumable.

The aerosol generating system includes an aerosol generating device and an aerosol generating consumable. The aerosol generating device comprises a consumable receiving surface including device electrical contacts, a power supply, and control electronics electrically connected to the power supply and the device electrical contacts. The aerosol generating consumable is configured to mate with the consumable receiving surface and electrically connect the device electrical contacts with the electrically resistive heating element and the thermo-conductive polymeric element.

In particular, the device electrical contacts electrically connect with the first and second electrically conductive contact portions of the heating assembly once the aerosol generating consumable is mated to the consumable receiving surface of the aerosol generating device. Current and sensing signals are conducted between the aerosol generating device and an aerosol generating consumable via the device electrical contacts and the first and second electrically conductive contact portions of the heating assembly.

The control electronics are configured to sense and drive the operation of the heating assembly. The control electronics are configured to receive signals from the thermo-conductive polymeric element to obtain the information of its conductivity. Further, the control electronics is configured to perform an overpowering operation to cause the fusing of the electrical fuse portion in terms of the information indicating that a value of the current passing through the thermo-conductive polymeric element is lower than a predetermined threshold, indicating a high temperature threshold has been reached by the heating assembly.

During a normal operation, the control electronics drives the heating assembly so that a heating load is generated to heat the capillary body. The aerosol generating liquid stored in the liquid reservoir penetrates into the capillary body and is then heated to become vapors by the heating assembly. As the user inhales, the vapors are drawn from the vaporizer into the user's mouth.

An operation temperature range of the heating assembly may be in a range from about 200°C to about 250°C. If aerosol generating liquid is present in the capillary body to cause a heat exhaustion based on a phase transition, the temperature of the capillary body continues to be being within this operation temperature range.

On the other hand, if no aerosol generating liquid is present in the capillary body, the temperature of the capillary body increases and causes the conductivity of the thermo-conductive polymeric element to be decreased. The control electronics receives this signal from the thermo-conductive polymeric element, which indicates that a value of the current passing through the thermo-conductive polymeric element, to judge whether the real-time value is lower than or equal to a predetermined threshold. If so, the control electronics automatically performs the overpowering operation or fusing current to the electric fuse portion of the electrically resistive heating element. The control electronics may be configured to deliver a fusing current to the electrical fuse portion in response to sensing a low threshold current value across the thermo-conductive polymeric element. The control electronics may be configured to deliver a fusing current to the electrical fuse portion in response to sensing a high threshold resistance value across the thermo-conductive polymeric element. Accordingly, an irreversible breaking of the electrical circuit causes the end-of-life of the heating assembly and aerosol generating consumable.

The control electronics may be configured to deliver a fusing current to the electrical fuse portion in response to sensing a low threshold current value across the thermo-conductive polymeric element that corresponds to a capillary body temperature of about 275 °C. The control electronics may be configured to deliver a fusing current to the electrical fuse portion in response to sensing a low threshold current value across the thermo-conductive polymeric element that corresponds to a capillary body temperature of about 265 °C. The control electronics may be configured to deliver a fusing current to the electrical fuse portion in response to sensing a low threshold current value across the thermo-conductive polymeric element that corresponds to a capillary body temperature of about 260 °C. The control electronics may be configured to deliver a fusing current to the electrical fuse portion in response to sensing a low threshold current value across the thermo-conductive polymeric element that corresponds to a capillary body temperature of about 255 °C. The control electronics may be configured to deliver a fusing current to the electrical fuse portion in response to sensing a low threshold current value across the thermo-conductive polymeric element that corresponds to a capillary body temperature of about 251 °C.

The aerosol-generating device may include a controller or control electronics comprising one or more processors (for example, microprocessors). The one or more processors may operate with associated data storage, or memory, for access to processing programs or routines and one or more types of data that may be employed to carry out the illustrative methods. For example, processing programs or routines stored in data storage may include programs or routines for controlling or sensing the heating element and thermo-conductive polymeric element individually controlling the heating assembly, implementing programs or schemes using one or more of the heating element and thermo-conductive polymeric element, and the like.

The control electronics may comprise a microprocessor, which may be a programmable microprocessor, a microcontroller, or an application specific integrated chip (ASIC) or other electronic circuitry capable of providing control. The control electronics may comprise further electronic components. The control electronics may be configured to regulate a supply of power to the heater assembly. Power may be supplied to the heater assembly continuously following activation of the system or may be supplied intermittently, such as on a puff-by-puff basis. The power may be supplied to the heater assembly in the form of pulses of electrical power.

The aerosol-generating device includes a power supply for the heater assembly of the aerosol generating consumable. The power source may be a battery, such as a lithium iron phosphate battery, within the device. As an alternative, the power supply may be another form of charge storage device such as a capacitor. The power supply may require recharging and may have a capacity that allows for the storage of enough energy for one or more smoking experiences. For example, the power supply may have sufficient capacity to allow for the continuous generation of aerosol for a period of around six minutes, corresponding to the typical time taken to smoke a conventional cigarette, or for a period that is a multiple of six minutes. In another example, the power supply may have sufficient capacity to allow for a predetermined number of puffs or discrete activations of the heater.

The computer program products used to implement the processes described herein may be provided using any programmable language, for example, a high-level procedural or object orientated programming language that is suitable for communicating with a computer system. Any such program products may, for example, be stored on any suitable device, for example, a storage media, readable by a general or special purpose program, controller apparatus for configuring and operating the computer when the suitable device is read for performing the procedures described herein. In other words, at least in one embodiment, the aerosol-generating device may be implemented using a non-transitory computer readable storage medium, configured with a computer program, where the storage medium so configured causes the computer to operate in a specific and predefined manner to perform functions described herein.

The exact configuration of the controller of the aerosol-generating device is not limiting and essentially any device capable of providing suitable computing capabilities and control capabilities to implement the method may be used. In view of the above, it will be readily apparent that the functionality may be implemented in any manner as would be known to one skilled in the art. As such, the computer language, the controller, or any other software/hardware which is to be used to implement the processes described herein shall not be limiting on the scope of the systems, processes, or programs (for example, the functionality provided by such processes or programs) described herein. The methods and processes described in this disclosure, including those attributed to the systems, or various constituent components, may be implemented, at least in part, in hardware, software, firmware, or any combination thereof. For example, various embodiments of the techniques may be implemented within one or more processors, including one or more microprocessors, DSPs, ASICs, FPGAs, CPLDs, microcontrollers, or any other equivalent integrated or discrete logic circuitry, as well as any combinations of such components. When implemented in software, the functionality ascribed to the systems, devices, and methods described in this disclosure may be embodied as instructions on a computer-readable medium such as RAM, ROM, NVRAM, EEPROM, FLASH memory, magnetic data storage media, optical data storage media, or the like. The instructions may be executed by one or more processors to support one or more embodiments of the functionality.

Reference is made to the following figures in which:
**FIG. 1** is a schematic diagram of an illustrative aerosol generating system;
**FIG. 2** is a schematic diagram of an illustrative aerosol generating consumable generating an aerosol;
**FIG. 3** is a schematic diagram of an illustrative disabled aerosol generating consumable;
**FIG. 4A** is a schematic diagram of an illustrative electrical fuse portion of the electrically resistive heating element;
**FIG. 4B** is a schematic diagram of an illustrative electrical fuse portion of the electrically resistive heating element after application of a fusing current;
**FIG. 5** is a schematic diagram of an illustrative aerosol generating consumable having the electrically resistive heating element and the thermo-conductive polymeric element fixed to two sides of the capillary body;
**FIG. 6** is a schematic diagram of an illustrative aerosol generating consumable having the electrically resistive heating element and the thermo-conductive polymeric element fixed to three sides of the capillary body;
**FIG. 7** is a schematic diagram of an illustrative control circuitry and heating assembly;
**FIG. 8** is a schematic diagram of another illustrative control circuitry and heating assembly; and
**FIG. 9** is a schematic diagram of another illustrative control circuitry and heating assembly.

The schematic drawings are not necessarily to scale and are presented for purposes of illustration and not limitation. The drawings depict one or more aspects described in this disclosure. However, it will be understood that other aspects not depicted in the drawings fall within the scope of the invention as defined by the appended claims.

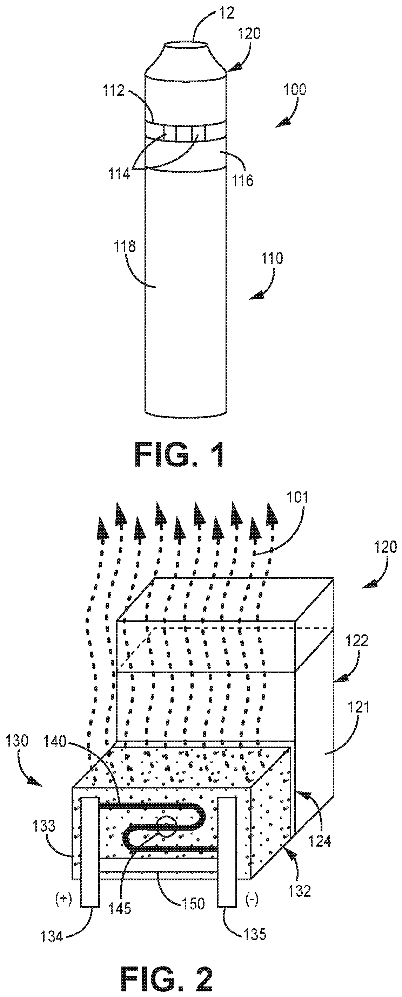

**FIG. 1** is a schematic diagram of an illustrative aerosol generating system 100. The aerosol generating system 100 comprises an aerosol generating device 110 and an aerosol generating consumable 120. The aerosol generating device 110 comprises a consumable receiving surface 112. The consumable receiving surface 112 includes device electrical contacts 114. The aerosol generating device 110 further comprises a power supply 118 and control electronics 116 electrically connected to the power supply 118 and the device electrical contacts 114. The aerosol generating consumable 120 is configured to mate with the consumable receiving surface 112 and electrically connect the device electrical contacts 114 with the electrically resistive heating element and the thermo-conductive polymeric element contained within the aerosol generating consumable 120. The aerosol generating consumable 120 may include a mouthpiece 12.

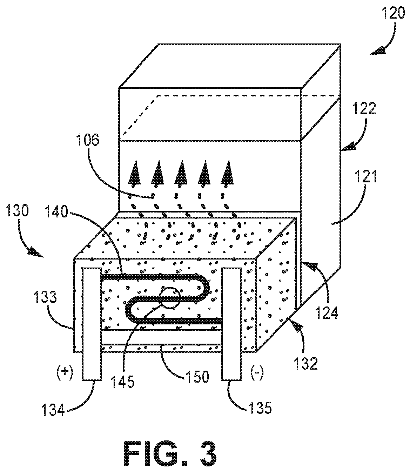

**FIG. 2** is a schematic diagram of an illustrative aerosol generating consumable 120 generating an aerosol 101. **FIG. 3** is a schematic diagram of an illustrative disabled aerosol generating consumable 120 generating a burning smell 106.

The aerosol generating consumable 120 comprises a liquid reservoir 122 configured to hold an aerosol generating liquid 121 and defining a liquid outlet aperture 124. A heating assembly 130 is fixed to the liquid outlet aperture 124. The heating assembly 130 comprises a capillary body 132 defining a porous outer surface 133. The capillary body 132 is configured to flow aerosol generating liquid 121 from the liquid outlet aperture 124 to the porous outer surface 133. An electrically resistive heating element 140 is fixed to the porous outer surface 133. A thermo-conductive polymeric element 150 is fixed to the porous outer surface 133. The electrically resistive heating element 140 includes an electrical fuse portion 145 configured to stop current flow through the resistive heating element.

The thermo-conductive polymeric element 150 and the electrically resistive heating element 140 are electrically parallel with each other. The thermo-conductive polymeric element 150 and the electrically resistive heating element 140 are in electrical contact with first and second electrically conductive contact portions 134, 135. The first and second electrically conductive contact portions 134, 135 electrically connect with the device electrical contacts 114 of the aerosol generating device 110.

**FIG. 3** illustrates a depleted aerosol generating consumable 120 with an empty liquid reservoir 122. The electrical fuse portion 145 is illustrated as being "blown" or in the open configuration, following a fusing current applied to the electrical fuse portion 145.

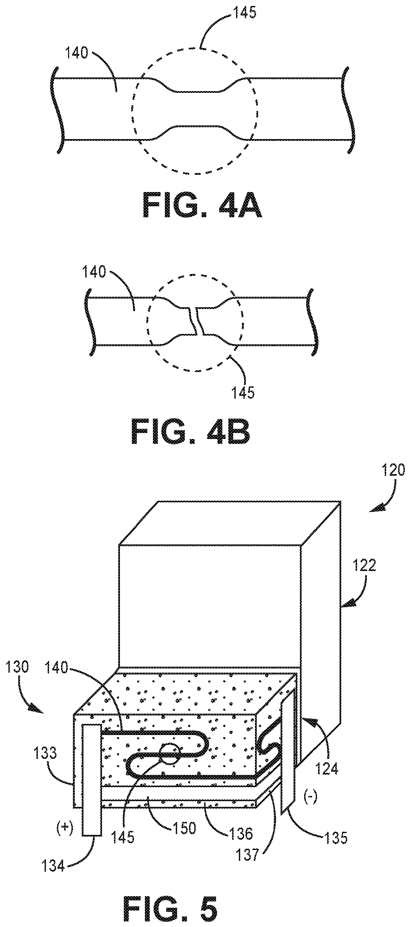

**FIG. 4A** is a schematic diagram of an illustrative electrical fuse portion 145 of the electrically resistive heating element 140. **FIG. 4B** is a schematic diagram of an illustrative electrical fuse portion 143 of the electrically resistive heating element 140 after application of a fusing current. The electrical fuse portion 145 defines a reduced width or cross-sectional area as compared to remaining portions of the electrically resistive heating element 140.

**FIG. 5** is a schematic diagram of an illustrative aerosol generating consumable 120 having the electrically resistive heating element 140 and the thermo-conductive polymeric element 150 fixed to two sides 136, 137 of the capillary body 132. The electrically resistive heating element 140 defines a curvilinear shape or serpentine shape and the thermo-conductive polymeric element 150 defines a linear or straight-line shape along the surfaces of the two sides 136, 137 of the capillary body 132.

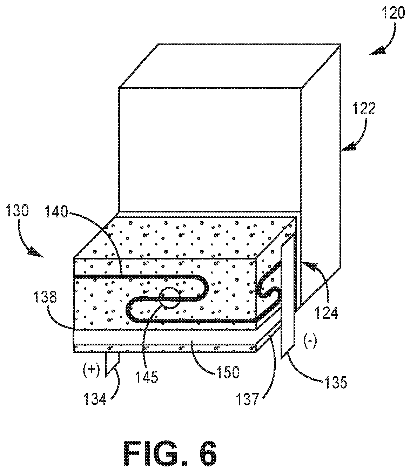

**FIG. 6** is a schematic diagram of an illustrative aerosol generating consumable 120 having the electrically resistive heating element 140 and the thermo-conductive polymeric element 150 fixed to three sides 136, 137, 138 of the capillary body 132. The electrically resistive heating element 140 defines a curvilinear shape or serpentine shape and the thermo-conductive polymeric element 150 defines a linear or straight-line shape along the surfaces of the three sides 136, 137, 138 of the capillary body 132.

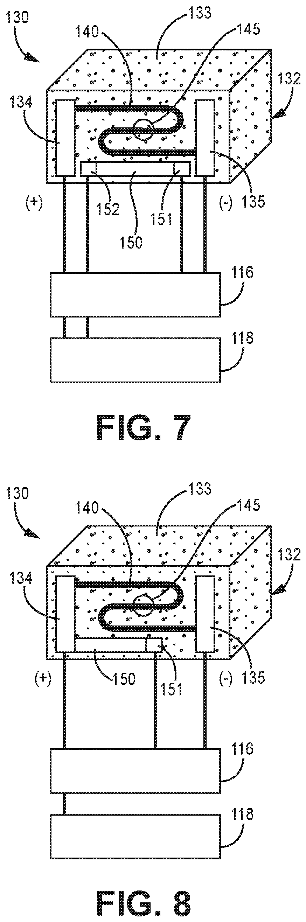

**FIG. 7** is a schematic diagram of an illustrative control circuitry and heating assembly 130. The heating assembly 130 is disposed on the outer surface 133 of the capillary body 132. The heating assembly 130 includes the electrically resistive heating element 140 and electrical fuse portion 145 electrically isolated from the thermo-conductive polymeric element 150. The electrically resistive heating element 140 are in electrical contact with first and second electrically conductive contact portions 134, 135. The first and second electrically conductive contact portions 134, 135 are electrically connected to the control electronics 116. The thermo-conductive polymeric element 150 are in electrical contact with third and fourth electrically conductive contact portions 151, 152. The third and fourth electrically conductive contact portions 151, 152 are electrically connected to the control electronics 116.

**FIG. 8** is a schematic diagram of another illustrative control circuitry and heating assembly 130. The heating assembly 130 is disposed on the outer surface 133 of the capillary body 132. The heating assembly 130 includes the electrically resistive heating element 140 and electrical fuse portion 145 electrically in parallel with the thermo-conductive polymeric element 150. The electrically resistive heating element 140 are in electrical contact with first and second electrically conductive contact portions 134, 135. The first and second electrically conductive contact portions 134, 135 are electrically connected to the control electronics 116. The thermo-conductive polymeric element 150 are in electrical contact with first and third electrically conductive contact portions 134, 151. The first and third electrically conductive contact portions 134, 151 are electrically connected to the control electronics 116.

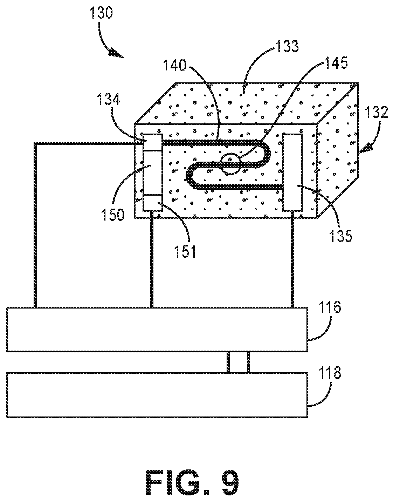

**FIG. 9** is a schematic diagram of another illustrative control circuitry and heating assembly 130. The heating assembly 130 is disposed on the outer surface 133 of the capillary body 132. The heating assembly 130 includes the electrically resistive heating element 140 and electrical fuse portion 145 electrically in parallel with the thermo-conductive polymeric element 150. The electrically resistive heating element 140 are in electrical contact with first and second electrically conductive contact portions 134, 135. The first and second electrically conductive contact portions 134, 135 are electrically connected to the control electronics 116. The thermo-conductive polymeric element 150 are in electrical contact with first and third electrically conductive contact portions 134, 151. The first and third electrically conductive contact portions 134, 151 are electrically connected to the control electronics 116.

## Claims

1. An aerosol generating consumable (120) comprising:
a liquid reservoir (122) configured to hold an aerosol generating liquid (121) and defining a liquid outlet aperture (124); and
a heating assembly (130) fixed to the liquid outlet aperture (124), the heating assembly (130) comprising:
a capillary body (132) defining a porous outer surface (133), the capillary body (132) configured to flow aerosol generating liquid (121) from the liquid outlet aperture (124) to the porous outer surface (133);
an electrically resistive heating element (140) fixed to the porous outer surface (133); and
a thermo-conductive polymeric element (150) fixed to the porous outer surface (133);
wherein the electrically resistive heating element (140) comprises an electrical fuse portion (145) configured to stop current flow through the electrically resistive heating element (140).

2. The aerosol generating consumable (120) according to claim 1, wherein the thermo-conductive polymeric element (150) is a positive temperature coefficient thermistor comprising polymer and conductive filler.

3. The aerosol generating consumable (120) according to any preceding claim, wherein the thermo-conductive polymeric element (150) and the electrically resistive heating element (140) are electrically parallel with each other.

4. The aerosol generating consumable (120) according to any preceding claim, wherein the thermo-conductive polymeric element (150) and the electrically resistive heating element (140) are electrically in series with each other.

5. The aerosol generating consumable (120) according to any preceding claim, wherein the electrical fuse portion (145) defines a reduced cross-sectional area as compared to remaining portions of the electrically resistive heating element (140).

6. The aerosol generating consumable (120) according to any preceding claim, wherein the capillary body (132) is a porous ceramic body.

7. The aerosol generating consumable (120) according to any preceding claim, wherein the electrically resistive heating element (140) is fixed to two sides of the capillary body (132), or the electrically resistive heating element (140) is fixed to three sides of the capillary body (132).

8. The aerosol generating consumable (120) according to any preceding claim, wherein the thermo-conductive polymeric element (150) is fixed to two sides of the capillary body (132), or the thermo-conductive polymeric element (150) is fixed to three sides of the capillary body (132).

9. The aerosol generating consumable (120) according to any preceding claim, wherein the electrically resistive heating element (140) defines a curvilinear shape or serpentine shape, and the thermo-conductive polymeric element (150) defines a linear or straight-line shape.

10. An aerosol generating system (100) comprising:
an aerosol generating device (110) comprising:
a consumable receiving surface (112), the consumable receiving surface (112) includes device electrical contacts (114);
a power supply (118);
control electronics (116) electrically connected to the power supply (118) and the device electrical contacts (114); and
an aerosol generating consumable (120), according to any preceding claim, configured to mate with the consumable receiving surface (112) and electrically connect the device electrical contacts (114) with the electrically resistive heating element (140) and the thermo-conductive polymeric element (150).

11. The aerosol generating system (100) according to claim 10, wherein the control electronics (116) is configured to sense an electrical current across the thermo-conductive polymeric element (150).

12. The aerosol generating system (100) according to claim 10 or 11, wherein the control electronics (116) is configured to deliver a fusing current to the electrical fuse portion (145) in response to sensing a low threshold current value across the thermo-conductive polymeric element (150).

13. The aerosol generating system (100) according to one of claims 10 to 12, wherein the control electronics (116) is configured to deliver a fusing current to the electrical fuse portion (145) in response to sensing a low threshold current value across the thermo-conductive polymeric element (150) that corresponds to a capillary body (132) temperature of about 275 °C, or about 265 °C, or about 260 °C, or about 255 °C.

14. A method of disabling an aerosol generating consumable heating element, comprising:
providing the aerosol generating system (100) of any one of claims 10 to 13;
heating the aerosol generating liquid (121) to form an aerosol with the heating element;
sensing an electrical current across the thermo-conductive polymeric element (150) on the heating element with the control electronics (116); and
delivering a fusing current to the electrically resistive heating element electrical fuse portion (145) in response to a sensed a low threshold current value across the thermo-conductive polymeric element (150).

15. The method according to claim 14, wherein delivering comprises sensing a low threshold current value corresponds to a capillary body temperature of about 275 °C, or about 265 °C, or about 260 °C, or about 255 °C.

## Patentansprüche

1. Aerosolerzeugender Verbrauchsartikel (120), umfassend:
einen Flüssigkeitsvorratsbehälter (122), der ausgelegt ist, eine aerosolerzeugende Flüssigkeit (121) aufzunehmen und eine Flüssigkeitsauslassöffnung (124) zu definieren; und
eine Heizbaugruppe (130), die an der Flüssigkeitsauslassöffnung (124) befestigt ist, die Heizbaugruppe (130) aufweisend:
einen Kapillarkörper (132), der eine poröse Außenfläche (133) definiert, der Kapillarkörper (132) ausgelegt ist, eine aerosolerzeugende Flüssigkeit (121) von der Flüssigkeitsauslassöffnung (124) zu der porösen Außenfläche (133) zu strömen;
ein elektrisches Widerstandsheizelement (140), das an der porösen Außenfläche (133) befestigt ist; und
ein wärmeleitendes Polymerelement (150), das an der porösen Außenfläche (133) befestigt ist;
wobei das elektrische Widerstandsheizelement (140) einen elektrischen Sicherungsabschnitt (145) aufweist, der ausgelegt ist, den Stromfluss durch das elektrische Widerstandsheizelement (140) zu unterbrechen.

2. Aerosolerzeugender Verbrauchsartikel (120) nach Anspruch 1, wobei das wärmeleitende Polymerelement (150) ein Thermistor mit positivem Temperaturkoeffizienten ist, der ein Polymer und einen leitfähigen Füllstoff umfasst.

3. Aerosolerzeugender Verbrauchsartikel (120) nach einem beliebigen vorhergehenden Anspruch, wobei das wärmeleitende Polymerelement (150) und das elektrische Widerstandsheizelement (140) elektrisch parallel zueinander sind.

4. Aerosolerzeugender Verbrauchsartikel (120) nach einem beliebigen vorhergehenden Anspruch, wobei das wärmeleitende Polymerelement (150) und das elektrische Widerstandsheizelement (140) elektrisch in Reihe zueinander sind.

5. Aerosolerzeugender Verbrauchsartikel (120) nach einem beliebigen vorhergehenden Anspruch, wobei der elektrische Sicherungsabschnitt (145) einen im Vergleich zu den übrigen Abschnitten des elektrischen Widerstandsheizelements (140) reduzierten Querschnittsbereich definiert.

6. Aerosolerzeugender Verbrauchsartikel (120) nach einem beliebigen vorhergehenden Anspruch, wobei der Kapillarkörper (132) ein poröser Keramikkörper ist.

7. Aerosolerzeugender Verbrauchsartikel (120) nach einem beliebigen vorhergehenden Anspruch, wobei das elektrische Widerstandsheizelement (140) an zwei Seiten des Kapillarkörpers (132) befestigt ist, oder das elektrische Widerstandsheizelement (140) an drei Seiten des Kapillarkörpers (132) befestigt ist.

8. Aerosolerzeugender Verbrauchsartikel (120) nach einem beliebigen vorhergehenden Anspruch, wobei das wärmeleitende Polymerelement (150) an zwei Seiten des Kapillarkörpers (132) befestigt ist, oder das wärmeleitende Polymerelement (150) an drei Seiten des Kapillarkörpers (132) befestigt ist.

9. Aerosolerzeugender Verbrauchsartikel (120) nach einem beliebigen vorhergehenden Anspruch, wobei das elektrische Widerstandsheizelement (140) eine kurven- oder schlangenförmige Form definiert und das wärmeleitende Polymerelement (150) eine lineare oder geradlinige Form definiert.

10. Aerosolerzeugungssystem (100); aufweisend:
eine Aerosolerzeugungsvorrichtung (110), aufweisend:
eine Verbrauchsartikel-Aufnahmefläche (112), die Verbrauchsartikel-Aufnahmefläche (112) umfassende elektrische Kontakte (114) der Vorrichtung;
einer Energieversorgung (118);
Steuerelektronik (116), die elektrisch mit der Energieversorgung (118) und den elektrischen Kontakten (114) der Vorrichtung verbunden ist; und
einen aerosolerzeugenden Verbrauchsartikel (120) nach einem beliebigen vorhergehenden Anspruch, ausgelegt, um mit der Verbrauchsartikel-Aufnahmefläche (112) zusammenzupassen und die elektrischen Kontakte (114) der Vorrichtung mit dem elektrischen Widerstandsheizelement (140) und dem wärmeleitenden Polymerelement (150) elektrisch zu verbinden.

11. Aerosolerzeugungssystem (100) nach Anspruch 10, wobei die Steuerelektronik (116) ausgelegt ist, einen elektrischen Strom über das wärmeleitende Polymerelement (150) zu erfassen.

12. Aerosolerzeugungssystem (100) nach Anspruch 10 oder 11, wobei die Steuerelektronik (116) ausgelegt ist, in Reaktion auf das Erfassen eines niedrigen Schwellenstromwerts über dem wärmeleitenden Polymerelement (150), dem elektrischen Sicherungsabschnitt (145) einen Schmelzstrom zuzuführen.

13. Aerosolerzeugungssystem (100) nach einem der Ansprüche 10 bis 12, wobei die Steuerelektronik (116) ausgelegt ist, in Reaktion auf das Erfassen eines niedrigen Schwellenstromwertes über dem wärmeleitenden Polymerelement (150), der einer Temperatur des Kapillarkörpers (132) von etwa 275 °C oder etwa 265 °C oder etwa 260 °C oder etwa 255 °C entspricht, dem elektrischen Sicherungsabschnitt (145) einen Schmelzstrom zuzuführen.

14. Verfahren für ein Deaktivieren eines aerosolerzeugenden Verbrauchsartikel-Heizelements, umfassend:
Vorsehen des Aerosolerzeugungssystems (100) nach einem der Ansprüche 10 bis 13;
Erwärmen der aerosolerzeugenden Flüssigkeit (121) für ein Bilden eines Aerosols mit dem Heizelement;
Erfassen eines elektrischen Stroms über dem wärmeleitenden Polymerelement (150) auf dem Heizelement mit der Steuerelektronik (116); und
Zuführen eines Schmelzstroms an den elektrischen Sicherungsabschnitt (145) des elektrischen Widerstandsheizelements in Reaktion auf einen erfassten niedrigen Schwellenstromwert über dem wärmeleitenden Polymerelement (150).

15. Verfahren nach Anspruch 14, wobei das Zuführen das Erfassen eines niedrigen Schwellenstromwertes umfasst, der einer Kapillarkörpertemperatur von etwa 275 °C oder 265 °C oder 260 °C oder 255 °C entspricht.

## Revendications

1. Consommable de génération d'aérosol (120), comprenant :
un réservoir de liquide (122) configuré pour contenir un liquide de génération d'aérosol (121) et définissant une ouverture de sortie de liquide (124) ; et
un ensemble de chauffage (130) attaché à l'ouverture de sortie de liquide (124), l'ensemble de chauffage (130) comprenant :
un corps capillaire (132) définissant une surface extérieure poreuse (133), le corps capillaire (132) étant configuré pour faire écouler un liquide de génération d'aérosol (121) depuis l'ouverture de sortie de liquide (124) vers la surface extérieure poreuse (133) ;
un élément chauffant électrorésistant (140) attaché à la surface extérieure poreuse (133) ; et
un élément polymère thermoconducteur (150) attaché à la surface extérieure poreuse (133) ;
dans lequel l'élément chauffant électrorésistant (140) comprend une portion fusible électrique (145) configurée pour arrêter la circulation de courant à travers l'élément chauffant électrorésistant (140).

2. Consommable de génération d'aérosol (120) selon la revendication 1, dans lequel l'élément polymère thermoconducteur (150) est une thermistance à coefficient de température positif comprenant un polymère et une charge conductrice.

3. Consommable de génération d'aérosol (120) selon l'une quelconque des revendications précédentes, dans lequel l'élément polymère thermoconducteur (150) et l'élément chauffant électrorésistant (140) sont électriquement parallèles l'un par rapport à l'autre.

4. Consommable de génération d'aérosol (120) selon l'une quelconque des revendications précédentes, dans lequel l'élément polymère thermoconducteur (150) et l'élément chauffant électrorésistant (140) sont électriquement en série l'un par rapport à l'autre.

5. Consommable de génération d'aérosol (120) selon l'une quelconque des revendications précédentes, dans lequel la portion fusible électrique (145) définit une superficie de coupe transversale réduite comparativement aux portions restantes de l'élément chauffant électrorésistant (140).

6. Consommable de génération d'aérosol (120) selon l'une quelconque des revendications précédentes, dans lequel le corps capillaire (132) est un corps céramique poreux.

7. Consommable de génération d'aérosol (120) selon l'une quelconque des revendications précédentes, dans lequel l'élément chauffant électrorésistant (140) est attaché aux deux côtés du corps capillaire (132), ou l'élément chauffant électrorésistant (140) est attaché aux trois côtés du corps capillaire (132).

8. Consommable de génération d'aérosol (120) selon l'une quelconque des revendications précédentes, dans lequel l'élément polymère thermoconducteur (150) est attaché aux deux côtés du corps capillaire (132), ou l'élément polymère thermoconducteur (150) est attaché aux trois côtés du corps capillaire (132).

9. Consommable de génération d'aérosol (120) selon l'une quelconque des revendications précédentes, dans lequel l'élément chauffant électrorésistant (140) définit une forme curviligne ou une forme en serpentin, et l'élément polymère thermoconducteur (150) définit une forme linéaire ou en ligne droite.

10. Système de génération d'aérosol (100) comprenant :
un dispositif de génération d'aérosol (110) comprenant :
une surface de réception de consommable (112), la surface de réception de consommable (112) comporte des contacts électriques de dispositif (114) ;
une alimentation électrique (118) ;
une électronique de commande (116) raccordée électriquement à l'alimentation électrique (118) et aux contacts électriques de dispositif (114) ; et
un consommable de génération d'aérosol (120), selon l'une quelconque des revendications précédentes, configuré pour s'accoupler avec la surface de réception de consommable (112) et raccorder électriquement les contacts électriques de dispositif (114) avec l'élément chauffant électrorésistant (140) et l'élément polymère thermoconducteur (150).

11. Système de génération d'aérosol (100) selon la revendication 10, dans lequel l'électronique de commande (116) est configurée pour détecter un courant électrique à travers l'élément polymère thermoconducteur (150).

12. Système de génération d'aérosol (100) selon la revendication 10 ou 11, dans lequel l'électronique de commande (116) est configurée pour délivrer un courant de fusion à la portion fusible électrique (145) en réponse à la détection d'une valeur de courant seuil basse à travers l'élément polymère thermoconducteur (150).

13. Système de génération d'aérosol (100) selon l'une des revendications 10 à 12, dans lequel l'électronique de commande (116) est configurée pour délivrer un courant de fusion à la portion fusible électrique (145) en réponse à la détection d'une valeur de courant seuil basse à travers l'élément polymère thermoconducteur (150) qui correspond à une température du corps capillaire (132) d'environ 275 °C, ou d'environ 265 °C, ou d'environ 260 °C, ou d'environ 255 °C.

14. Procédé de désactivation d'un élément de chauffage de consommable de génération d'aérosol, comprenant :
la fourniture du système de génération d'aérosol (100) selon l'une quelconque des revendications 10 à 13 ;
le chauffage du liquide de génération d'aérosol (121) pour former un aérosol avec l'élément de chauffage ;
la détection d'un courant électrique à travers l'élément polymère thermoconducteur (150) sur l'élément de chauffage avec l'électronique de commande (116) ; et
la fourniture d'un courant de fusion à la portion fusible électrique d'élément chauffant électrorésistant (145) en réponse à une valeur de courant seuil basse détectée à travers l'élément polymère thermoconducteur (150).

15. Procédé selon la revendication 14, dans lequel la délivrance comprend la détection d'une valeur de courant seuil basse correspondant à une température de corps capillaire d'environ 275 °C, ou d'environ 265 °C, ou d'environ 260 °C, ou d'environ 255 °C.
